# FASCICULE DE BREVET EUROPEEN

(11) **EP 2 812 670 B1**
(45) Date de publication et mention de la délivrance du brevet: **14.10.2015**
(21) Numéro de dépôt: 13706626.2
(22) Date de dépôt: 04.02.2013
(51) Int. Cl.: G01N 15/08, B01D 65/10, B01D 69/12, B01D 71/26, B01D 71/38

(54) **PROCÉDÉ DE MODÉLISATION DE PERMÉATION AUX SOLVANTS D'UNE STRUCTURE POLYMÈRE MULTICOUCHES**
VERFAHREN ZUR MODELLIERUNG DER DURCHLÄSSIGKEIT EINER MEHRLAGIGEN POLYMERSTRUKTUR GEGENÜBER LÖSUNGSMITTELN
METHOD OF MODELING PERMEATION OF A MULTILAYER POLYMER STRUCTURE TO SOLVENTS

(30) Priorité: 06.02.2012 FR 1251083
(43) Date de publication de la demande: 17.12.2014
(73) Titulaire: Arkema France, 92700 Colombes (FR); Centre National de la Recherche Scientifique, 75794 Paris Cedex 16 (FR); Université de Lorraine, 54052 Nancy Cedex (FR)
(72) Inventeur: BRULET, Benoît, F-27170 Beaumont Le Roger (FR); ZHAO, Jing, F-92400 Courbevioe (FR); JONQUIERES, Anne, F-54500 Vandoeuvre (FR); CLEMENT, Robert, F-54630 Richardmenil (FR)
(74) Mandataire: Gavin, Pablo
(86) Numéro de dépôt international: PCT/FR2013/050229
(87) Numéro de publication internationale: WO 2013/117845

(56) Documents cités:
- EP-A1- 1 607 213
- BENRABAH Z ET AL: "Modeling of Fuel Permeation in Multilayer Automotive Plastic Fuel Tanks", SAE INTERNATIONAL JOURNAL OF MATERIALS AND MANUFACTURING APRIL 2011 SAE INTERNATIONAL USA, vol. 4, no. 1, avril 2011 (2011-04), pages 449-459, XP008155348, DOI: DOI:10.4271/2011-01-0248
- SHAH M R ET AL: "Analysis of transient permeation as a technique for determination of sorption and diffusion in supported membranes", JOURNAL OF MEMBRANE SCIENCE, ELSEVIER SCIENTIFIC PUBL.COMPANY. AMSTERDAM, NL, vol. 280, no. 1-2, 1 septembre 2006 (2006-09-01), pages 452-460, XP024931983, ISSN: 0376-7388, DOI: 10.1016/J.MEMSCI.2006.01.051 [extrait le 2006-09-01]
- JONQUIERES A ET AL: "From binary to ternary systems: general behaviour and modelling of membrane sorption in purely organic systems strongly deviating from ideality by UNIQUAC and related models", JOURNAL OF MEMBRANE SCIENCE, ELSEVIER SCIENTIFIC PUBL.COMPANY. AMSTERDAM, NL, vol. 174, no. 2, 1 juillet 2000 (2000-07-01), pages 255-275, XP004201926, ISSN: 0376-7388, DOI: 10.1016/S0376-7388(00)00390-2
- CLEMENT ET AL: "An original automated desorption apparatus for measuring multi-component sorption properties of barrier polymer films", JOURNAL OF MEMBRANE SCIENCE, ELSEVIER SCIENTIFIC PUBL.COMPANY. AMSTERDAM, NL, vol. 302, no. 1-2, 24 août 2007 (2007-08-24), pages 95-101, XP022210825, ISSN: 0376-7388, DOI: 10.1016/J.MEMSCI.2007.06.031
- DISCLOSED ANONYMOUSLY: "Toughened nylon-66 (DuPont FE4250HP) with zero ethanol fuel permeability for flexible fuel vehicle fuel system", RESEARCH DISCLOSURE, MASON PUBLICATIONS, HAMPSHIRE, GB, vol. 512, no. 95, 1 décembre 2006 (2006-12-01), page 1657, XP007136968, ISSN: 0374-4353

## Description

La présente invention concerne le domaine de la perméation aux mélanges de solvants d'une structure polymère multicouche. Par perméation on entend le transport d'un fluide, tel qu'un mélange de solvants, au travers d'une membrane. Plus précisément, il s'agit de la quantité de chacun des composants d'un mélange de solvants, traversant une structure polymère multicouche.

Plus particulièrement, l'invention se rapporte à un procédé de modélisation de perméation aux mélanges de solvants d'une structure polymère multicouche, notamment aux essences et plus particulièrement aux essences de type carburants. L'invention se rapporte enfin à un programme d'ordinateur mettant en oeuvre le procédé de modélisation.

Un récipient, en particulier un réservoir de carburant, comprenant une structure polymère multicouche dont la perméation est modélisée selon le procédé de modélisation, est par ailleurs décrit.

Historiquement, les conteneurs ou les réservoirs utilisés pour le stockage ou le transport de produits chimiques étaient fabriqués en métal. Ces pièces en métal sont progressivement remplacées par des matériaux plastiques monocouches, plus légers, plus faciles à mettre en oeuvre, permettant de réaliser des réservoirs aux géométries complexes, non sensibles à la corrosion. Toutefois ces réservoirs plastiques monocouches ne satisfont plus à la réglementation des émissions et il convient donc de développer des solutions plastiques plus performances en termes de propriétés barrières que les solutions monocouches. Une voie utilisée industriellement aujourd'hui est la structure plastique multicouche alliant différents matériaux judicieusement choisis, afin d'augmenter les propriétés barrières de ladite structure. Le secteur du transport notamment cherche constamment à alléger les véhicules, pour diminuer leurs émissions et leur consommation énergétique. Cependant, ces matériaux légers doivent répondre aux normes d'étanchéité les plus strictes. De ce fait, la paroi polymère d'un réservoir de carburant doit avoir de bonnes propriétés barrières pour limiter le transfert massique des carburants dans l'environnement. Le mot barrière est utilisé dans la description pour décrire des matériaux barrières aux essences. Pour jouer au mieux son rôle de barrière, la paroi du réservoir est notamment formée d'une structure polymère multicouche, chacune des couches jouant un rôle de barrière pour l'un au moins des composés du carburant.

Les normes environnementales sont de plus en plus drastiques pour réduire au maximum les émissions d'hydrocarbures dans l'environnement. Ainsi, la norme Européenne Euro V, en vigueur depuis septembre 2009, limite l'émission à 2,0 g par test, un test pouvant durer jusqu'à 36 heures. La norme Américaine PZEV (acronyme anglais pour « Partial Zero Emission Vehicle ») limite les émissions à 0,35 g par test de 3 jours pour le véhicule entier. Par conséquent, dans ce contexte, il faut optimiser les parois des réservoirs de carburants, en optimisant leur perméation aux essences, afin de limiter au maximum toute perte de carburant dans l'environnement.

Une essence est un mélange de composés aromatiques, aliphatiques et d'un composé oxygéné, très souvent de l'alcool. Or les polymères ne sont pas barrières à tous les composés contenus dans une essence et tous les polymères ne sont pas barrières aux mêmes composés contenus dans une essence. Ainsi, le polyéthylène par exemple fait barrière à l'alcool, mais pas au toluène, qui est un composé aromatique constituant de l'essence.

Les matériaux clés utilisés dans les structures barrières se caractérisent par de faibles niveaux de gonflement lorsqu'ils sont mis au contact des essences, et par une mobilité réduite des petites molécules diffusantes dans la matrice polymère. Ceci impose des délais de mise en équilibre très longs pour les structures industrielles de réservoir multicouches, typiquement de l'ordre de l'année. De plus, l'étude expérimentale de ces phénomènes nécessite d'accumuler de nombreuses mesures. Ces considérations ont conduit la demanderesse à réaliser ces caractérisations à partir de films beaucoup plus minces que ceux qui sont mis en oeuvre dans les parois de réservoirs. En effet, chaque fois que l'épaisseur d'un film est divisée par deux, son délai de demi sorption/désorption est approximativement divisé par quatre et le flux de matière est amplifié par un facteur deux. Les mesures expérimentales restent très consommatrices de temps puisqu'elles durent en moyenne de 1 à 3 mois pour des lignes essence d'1 mm d'épaisseur et au moins un an pour des réservoirs d'épaisseur minimum de 3 mm.

Au vu du temps extrêmement long pour obtenir des mesures permettant de valider ou non des structures polymères multicouches en vue de la réalisation de la paroi d'un réservoir, il est apparu nécessaire de développer des modèles pour faire une pré-sélection des structures utilisables qui répondent aux normes. Une telle modélisation permet de valider des structures en 1 jour lorsque les expérimentations mettent plusieurs mois.

Il existe des modèles pour prédire la perméabilité à travers des structures multicouches, mais ces modèles sont réalisés dans le cadre de l'étude de la perméabilité aux gaz simples, tels que le dioxyde de carbone CO₂, l'oxygène O₂, ou l'azote N₂, ou encore à la vapeur d'eau. Ces modèles permettent par exemple de prédire la durée de conservation des aliments en estimant la perméabilité à l'oxygène d'une membrane multicouche entourant les aliments. En revanche ces modèles ne permettent pas de prédire la perméabilité de structures multicouches à une essence. En effet, une essence est un mélange de solvants et la composition de l'essence varie dans l'épaisseur de la structure multicouche en fonction de la nature et de l'épaisseur de la couche traversée. Différents paramètres doivent donc être pris en compte comme par exemple les interactions du type essence / polymère (sorption), la résistance à l'interface entre deux couches polymères et la diffusion de l'essence, et de chacun de ses constituants, dans chaque couche.

A partir de lois de diffusion (Loi de Fick à titre d'exemple) et de lois de sorption (Modèle Uniquac à titre d'exemple), définies pour chaque monocouche, on prévoit le comportement de structures multicouches, associant des matériaux différents, et on valide ainsi ou non des structures de réservoirs vis-à-vis des normes environnementales de plus en plus sévères.

On connait également par le document intitulé « Modeling of fuel permeation in multilayer automotive plastic fuel tanks », publié en avril 2011 par Messieurs Benrabah, Thibault et DiRaddo, un procédé de modélisation de la perméation aux essences de matériaux multicouches, type réservoirs, mais les hypothèses retenues dans ce procédé sont très limitatives, ne s'appliquent pas à l'ensemble des couches des réservoirs décrits et ne permettent pas en conséquence d'obtenir un résultat fiable.

L'invention a donc pour but de remédier à au moins un des inconvénients de l'art antérieur. L'invention vise notamment à permettre de modéliser le comportement d'une essence dans une structure polymère multicouche afin de valider ou non, de manière simple, rapide et efficace une structure de réservoir.

A cet effet, l'invention a pour objet un procédé de réalisation d'un modèle de perméation aux mélanges de solvants d'une structure polymère multicouche à n monocouches (n≥2), selon l'énoncé de la revendication indépendante 1.

Selon une autre caractéristique, le mélange de solvants est une essence comprenant un mélange d'au moins deux composés choisis parmi un composé oxygéné (a), un composé aliphatique (b) et un composé aromatique (c), dans des proportions différentes. Plus particulièrement, l'essence comprend un mélange d'au moins un composé oxygéné (a), un composé aliphatique (b) et un composé aromatique (c), dans des proportions différentes.

La modélisation de la perméation aux essences d'une structure multicouches permet ainsi de prédire l'ensemble des flux partiels des différents solvants (éthanol, iso-octane et toluène) à travers des structures multicouches qui se composent de plusieurs couches de polymères de natures et d'épaisseurs différentes. Le procédé de modélisation permet donc d'optimiser des structures de réservoir à partir de calculs et permet de gagner du temps, et donc de l'argent, sur la conception des réservoirs. Le procédé permet en outre d'optimiser d'une part l'épaisseur des différentes couches de la structure et d'autre part, l'ordre d'empilement des matériaux constituant les différentes couches de la structure multicouches.

Selon d'autres caractéristiques optionnelles du procédé :
- préalablement à l'étape 2c.1. d'estimation des flux partiels, une étape d'initialisation consiste à calculer, à partir des valeurs de sorption en entrée et en sortie de la structure multicouche, des activités correspondantes de chacun des composés de ladite composition de mélange de solvants en entrée et sortie de ladite structure, puis à créer un profil linéaire d'activité pour chacun des solvants de l'entrée à la sortie de la structure puis, à partir de ce profil d'activité, estimer des concentrations locales de chacun des composés de ladite composition de mélange de solvants dans chaque tranche de ladite structure multicouche, ainsi que l'épaisseur des tranches élémentaires en tenant compte d'un gonflement monodirectionnel de ladite structure multicouche,
- l'étape 2c.1. d'estimation des flux partiels consiste à estimer d'une part des flux de diffusion, à partir des concentrations locales de chacun des composés de ladite composition de mélange de solvants dans chaque tranche élémentaire, et d'autre part des flux de convection, à partir des flux partiels mesurés à l'étape 2a et des concentrations locales de chacun des composés de ladite composition de mélange de solvants dans chaque tranche élémentaire,
- le traitement à l'interface entre deux monocouches de matériaux polymère différents de l'étape 2c.2 se base sur le fait qu'il y a égalité des flux entre deux monocouches adjacentes et que la concentration de chacun des composés à l'entrée de la monocouche aval B ne peut dépasser le plafond de sorption,
- le plafond de sorption est calculé à partir des activités de chacun des composés de ladite composition de mélange de solvants, en supposant qu'il y a continuité d'activité entre la dernière tranche d'une monocouche amont A en chevauchement avec une première tranche d'une monocouche aval B,
- chaque composition d'essence E1 à Ey comprend un taux volumique (%) de l'un des composés (a) qui varie d'une composition à l'autre, tandis que les autres composés (b, c) présentent une proportion volumique identique,
- chaque composition d'essence comprend un mélange de plusieurs composés (a, b, c) choisis parmi l'éthanol (a), l'iso-octane (b), et le toluène (c),

Un récipient, qui ne fait pas partie de la présente invention, est réalisé dans une structure polymère multicouche dont la perméation aux mélanges de solvants est modélisée grâce au procédé de modélisation ci-dessus décrit.

Enfin, selon l'énoncé de la revendication indépendante 11, l'invention se rapporte aussi à un programme d'ordinateur comprenant des instructions de code de programme pour l'exécution des étapes du procédé de modélisation ci-dessus décrit, lorsque ledit programme est exécuté par un processeur.

D'autres particularités et avantages de l'invention apparaîtront à la lecture de la description qui est faite ci-après et qui est donnée à titre d'exemple illustratif et non limitatif, en regard des figures qui représentent :
- la figure 1, un schéma d'un diagramme ternaire correspondant à des mélanges de solvants utilisés dans des compositions d'essences modèles,
- la figure 2, un schéma représentant un modèle de « sorption-diffusion » sur lequel repose la perméabilité d'une structure polymère monocouche,
- la figure 3, un schéma de principe d'un procédé de modélisation selon l'invention,
- la figure 4, un schéma de principe d'une structure multicouche virtuellement découpée en tranches élémentaires pour permettre un calcul numérique fin utilisé dans le procédé de modélisation selon l'invention,
- la figure 5, des courbes représentant les flux partiels, mesurés et calculés, des différents composés d'une essence à différentes compositions dans une structure bicouche donnée,
- la figure 6, des courbes représentant les flux partiels, mesurés et calculés, des différents composés d'une essence à différentes compositions dans une autre structure bicouche,
- la figure 7, des courbes représentant les flux partiels, mesurés et calculés, des différents composés d'une essence à différentes compositions dans une autre structure tri-couche,
- la figure 8, des courbes représentant les flux partiels calculés des différents composés d'une essence en fonction de l'épaisseur de la couche disposée au milieu d'une structure tricouche,
- la figure 9, des courbes représentant les flux partiels calculés des différents composés d'une essence en fonction de l'épaisseur de la dernière couche de la même structure tricouche que la figure 8,
- la figure 10 des courbes représentant les flux partiels calculés des différents composés d'une essence en fonction de l'épaisseur de la première couche de la même structure tricouche que la figure 8,
- la figure 11 des courbes représentant les flux partiels calculés des différents composés d'une essence en fonction de la proportion volumique de composé oxygéné dans la composition d'essence, dans une structure 5 couches.

Dans la suite de la description, le terme essence désigne un mélange de solvants comprenant au moins deux composés choisis parmi un composé oxygéné (a), un composé aliphatique (b) et un composé aromatique (c), dans des proportions différentes. A titre d'exemple ce peut être un parfum ou un carburant.

Dans l'exemple décrit ci-après il s'agit d'un carburant composé d'hydrocarbures aromatiques, d'hydrocarbures aliphatiques et d'un composé oxygéné. Dans le cas présent, une essence dite modèle est utilisée. Elle est composée de toluène (de formule C₇H₈, représentant les aromatiques), d'isooctane (de formule C₈H₁₈, représentant les aliphatiques) et d'éthanol (de formule C₂H₆O, représentant le composé oxygéné). Toutefois, l'invention ne se limite pas à ces composés.

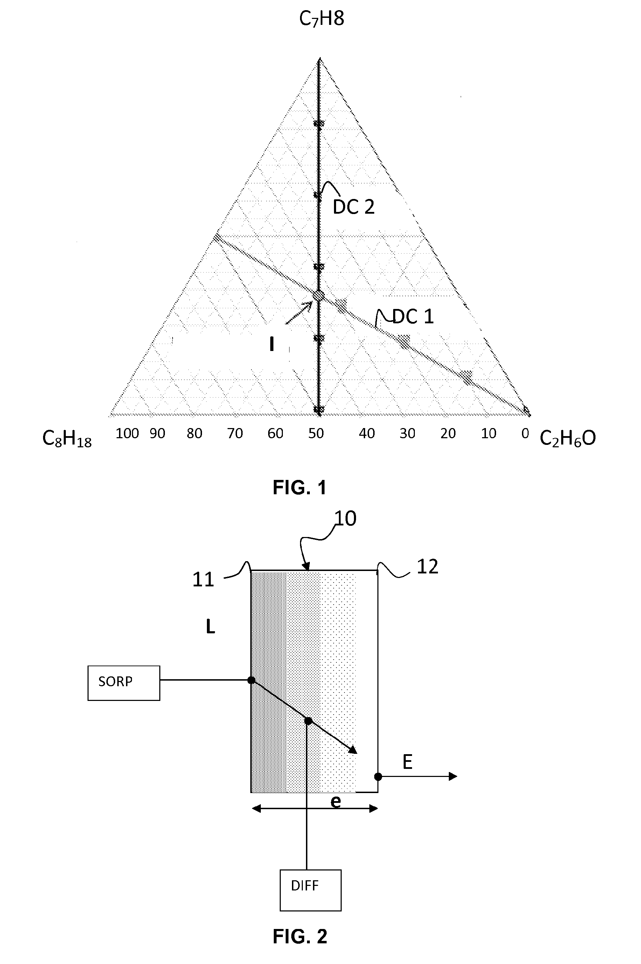

La figure 1 représente un diagramme ternaire correspondant à différents mélanges de ces trois composés utilisés dans différentes compositions d'essences modèles. Sur ce diagramme sont représentées deux droites spécifiques dénommées droite de conjugaison de l'éthanol, référencée DC1, et droite de conjugaison du toluène, référencée DC2. La droite de conjugaison de l'éthanol, DC1, correspond à une composition équivolumique en toluène et iso-octane dans laquelle le pourcentage volumique d'éthanol varie de 0 à 100%. Cette droite de conjugaison permet d'évaluer l'impact de l'addition de composés oxygénés sur les réservoirs de carburants. De même, la droite de conjugaison du toluène, DC2, correspond à une composition équivolumique en éthanol et iso-octane, dans laquelle le pourcentage volumique de toluène varie entre 0 et 100%. Ces deux droites de conjugaison présentent un point d'intersection I qui permet de vérifier la cohérence des valeurs expérimentales obtenues pour ces deux droites.

Pour les besoins de la modélisation, on choisit plusieurs compositions d'essence différentes E1 à Ey, par exemple entre 5 et 10 compositions différentes, de préférence entre 6 et 8, le long d'au moins une des deux droites de conjugaison, par exemple le long de la droite de conjugaison de l'éthanol DC1.

La perméabilité d'une membrane polymère monocouche 10 repose essentiellement sur le modèle « sorption-diffusion », tel qu'illustré sur la figure 2. Une première mesure consiste à mesurer la sorption SORP sur la face amont 11 de la membrane 10, c'est-à-dire la face en contact direct avec le mélange liquide L. La membrane 10 gonfle d'une façon sélective face au mélange liquide L adjacent. La sélectivité est due à l'affinité du matériau formant la membrane avec les différents composés présents dans le mélange liquide L. Cela signifie que la composition du liquide qui entre dans la face amont 11 de la membrane 10 est généralement très différente de celle du mélange liquide L. Une deuxième mesure consiste à mesurer la diffusion DIFF, c'est-à-dire la quantité de matière qui diffuse de la face amont 11 vers la face aval 12 de la membrane 10. La diffusion DIFF relève de la cinétique. Elle dépend du gradient de concentration de chaque composé du mélange liquide L, migrant de la face amont 11 vers la face aval 12. Enfin, un autre phénomène, qui n'entre pas en compte pour le calcul de la perméabilité, concerne la désorption E des composés absorbés, par évaporation en face aval 12. Les molécules de composés ayant migré jusqu'à la face aval 12 se désorbent par évaporation E. Cette désorption n'a pas d'incidence sur le calcul de la perméation de la membrane car cette étape n'est pas une limite dans le processus de perméation dans les conditions considérées.

Par convention, pour toutes les structures multicouches, le premier matériau nommé est celui qui se trouve au contact du mélange liquide. Par exemple, dans le cas d'une structure bicouche dénommée « Liant/EVOH », la couche de liant se trouve à l'amont, au contact du mélange liquide, et l'EVOH est à l'aval.

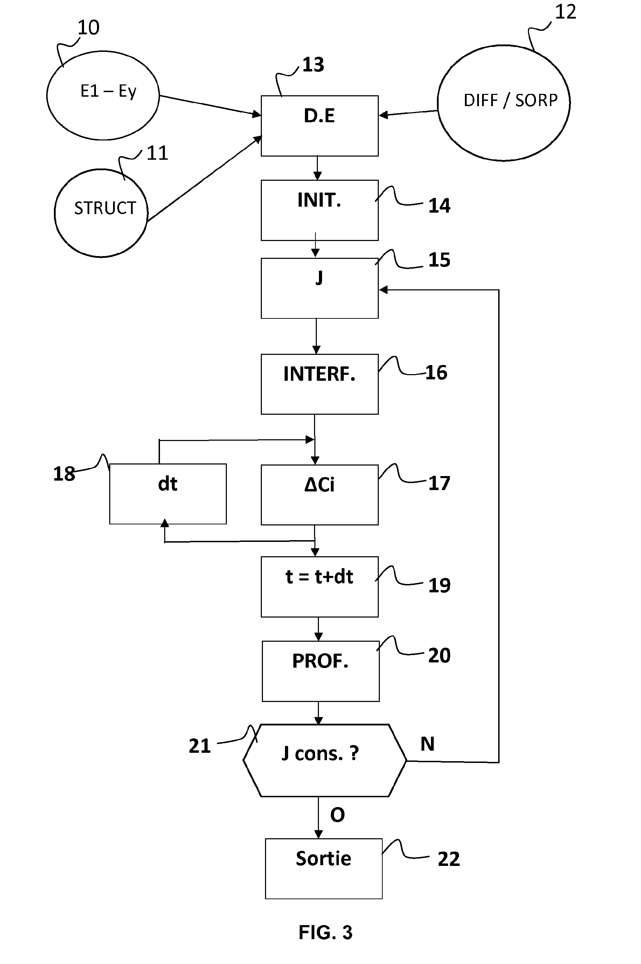

### La figure 3 représente un schéma de principe du procédé de modélisation selon l'invention.

### Etapes 10, 11, 12, et 13 : Données d'entrées et Initialisation du calcul,

Pour pouvoir modéliser la perméabilité à une essence d'une structure multicouche, il faut connaître le comportement en sorption et en diffusion de chacun des composés de l'essence dans chaque polymère de constitution de la structure multicouches. C'est pourquoi, la modélisation repose sur des mesures expérimentales de sorption et de diffusion faites, à 50 °C, sur chacune des monocouches de constitution de la structure multicouche, pour toute la gamme de compositions du système ternaire ethanol/ iso-octane/toluène.

A cette fin, pour chacune des compositions d'essence modèle E1 à Ey choisies (étape 10), des mesures expérimentales préalables de sorption et de diffusion sont réalisées sur des monocouches de polymère, d'épaisseur comprise entre 25 et 200 µm, entrant dans la constitution de la structure multicouche (STRUCT 11) pour laquelle le calcul de perméabilité aux essences doit être effectué. Ainsi, ces mesures permettent de connaître le comportement de chacun des solvants de l'essence dans chacun des matériaux polymère de la structure multicouche, pris isolément.

Le gonflement d'un polymère monocouche par des solvants peut être considéré comme un équilibre thermodynamique entre deux phases différentes. Le polymère sec, qui est au contact des solvants, crée un gradient de potentiel chimique. Cette différence de potentiel chimique joue le rôle de force motrice pour assurer le transfert de matière et la pénétration des molécules de solvants dans le matériau polymère. Suite au régime transitoire, un état stationnaire s'établit avec la présence d'une quantité de solvant constante dans le polymère. Du point de vue de la thermodynamique, cet équilibre se traduit par une égalité des potentiels chimiques des différents solvants dans la phase liquide, c'est-à-dire dans l'essence modèle, et dans la phase solide, c'est-à-dire le polymère gonflé.

La mesure de sorption consiste alors, à déterminer le gonflement global et les gonflements partiels du polymère dans un liquide à l'équilibre thermodynamique, ce qui correspond à l'obtention d'une masse constante pour le polymère gonflé. Cette mesure de sorption est réalisée pour chacun des solvants de chacune des compositions d'essence choisies E1 à Ey à l'étape 10. Pour cela, le polymère de constitution d'une monocouche est immergé dans chaque composition d'essence E1 à Ey et des mesures de masse de polymère gonflé sont effectuées jusqu'à masse constante, ce qui peut prendre plusieurs mois. On mesure ensuite les gonflements partiels relatifs à chaque constituant de l'essence après la désorption des solvants pour chaque composition d'essence, la quantification étant réalisée par chromatographie en phase gazeuse.

La diffusion, quant à elle, est un phénomène de transport irréversible qui se traduit par une migration d'espèces chimiques dans un milieu des zones de plus grand potentiel chimique vers celles de plus faible potentiel chimique. Ce phénomène est par exemple décrit par la première loi de Fick qui énonce que le flux de diffusion est proportionnel au gradient de concentration. La mesure de diffusion consiste à mesurer en régime stationnaire des flux partiels de chaque solvant pour chaque composition d'essence modèle E1 à Ey migrant dans le temps à travers une monocouche de polymère, c'est-à-dire la quantité d'un composé passant à travers la monocouche par unité de temps et de surface. Cette mesure est avantageusement réalisée au moyen d'un perméamètre couplé à un chromatographe en phase gazeuse pour l'analyse en ligne du perméat.

Les mesures expérimentales ainsi réalisées constituent alors des données d'entrée D.E (étape 13) pour le procédé de modélisation de la perméation d'une structure multicouche.

Par ailleurs, pour mettre en oeuvre le procédé de modélisation, il faut en outre disposer des lois de sorption SORP (étape 12) qui permettent de relier les activités des trois solvants aux concentrations mesurées à l'équilibre de sorption pour chaque matériau polymère. Pour pouvoir modéliser les équilibres de sorption, il faut connaître les activités des différents solvants dans les mélanges modèles de carburants utilisés. Le calcul des activités de l'éthanol, de l'iso-octane et du toluène de chaque composition d'essence modèle est effectué à 50°C, température choisie pour les mesures de sorption. Ce calcul est réalisé sur la base du modèle connu sous le nom d'UNIQUAC (UNlversal QUAsi Chemical theory) appliqué aux mélanges ternaires liquides correspondants. Des mesures de sorption sont effectuées pour déterminer la composition du polymère gonflé à 50°C, pour différentes compositions d'essences modèles correspondant à au moins l'une des deux droites de conjugaison de l'éthanol ou du toluène. Les activités des différents solvants dans le polymère gonflé sont ensuite calculées à partir des mesures de sorption effectuées pour déterminer la composition d'un polymère gonflé à 50°C. Ces calculs sont réalisés à l'aide du modèle UNIQUAC appliqué aux systèmes quaternaires (éthanol/iso-octane/toluène/polymère gonflé). Les paramètres d'interaction binaire polymère/ solvant du modèle UNIQUAC sont finalement ajustés pour que les résultats de la modélisation et les résultats des mesures convergent et obtenir ainsi une loi thermodynamique de sorption optimisée (12) pour chaque monocouche. La généralisation du modèle est alors possible et le calcul des activités des trois solvants dans un polymère gonflé peut être réalisé lorsque la composition du polymère gonflé est connue.

Enfin, pour la mise en oeuvre du procédé de modélisation, il faut également disposer des lois de diffusion DIFF (étape 12) pour rendre compte de la variation des coefficients de diffusion de ces solvants en fonction de leur concentration locale dans chaque matériau polymère considéré. La mesure des flux partiels de chaque composé de la composition d'essence à travers chaque monocouche permet d'obtenir, pour chaque monocouche, un modèle qui donne une loi cinétique de diffusion pour chaque composé.

Grâce à la mesure des équilibres de sorption pour les différents polymères, les concentrations des trois solvants en amont de la structure, c'est-à-dire à l'entrée de la première monocouche de la structure multicouche, est connue et fixée par les données expérimentales. Les concentrations en aval, c'est-à-dire à la sortie de la dernière monocouche de la structure multicouche, sont toujours considérées égales à zéro. On définit ainsi les conditions aux limites à l'amont et à l'aval de la structure multicouche pour le calcul numérique des flux partiels.

Enfin, partant du principe qu'une structure multicouche à n monocouches peut être formellement considérée comme une succession de (n-1) bicouches, chaque bicouche comprenant une monocouche amont A et une monocouche aval B, les calculs prédictifs pour une structure multicouche sont réalisés selon une répétition de calculs sur les différentes bicouches impliquées.

### Etapes 14 à 21 : traitement pour chaque composition E1 à Ey (pouvant être effectué indifféremment en parallèle ou en série),

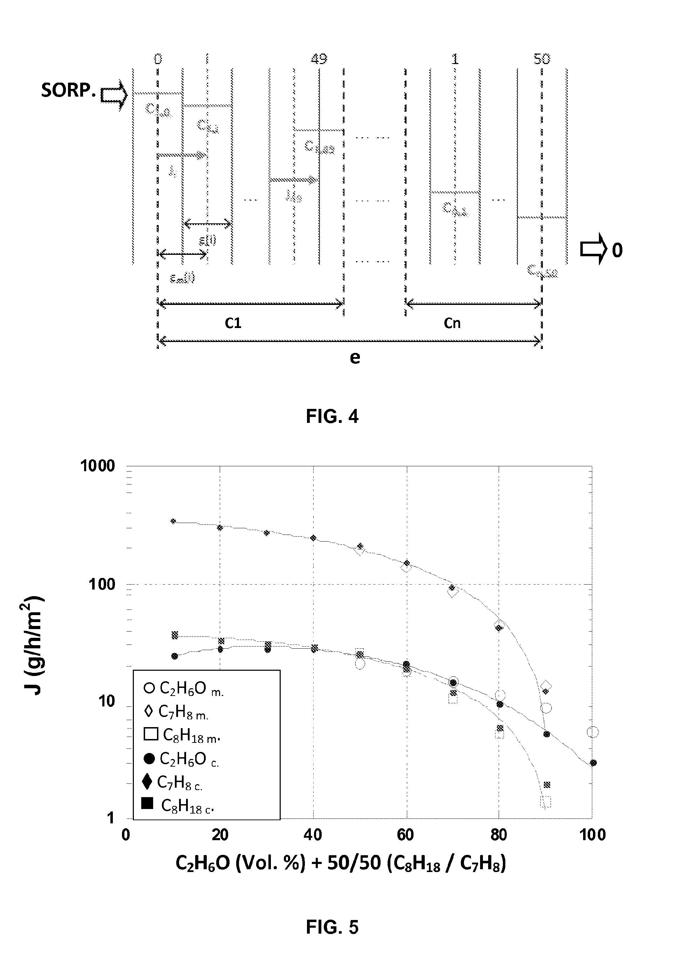

Après avoir collecté toutes les données d'entrée D.E à prendre en compte pour la modélisation, l'étape suivante 14 du procédé de modélisation consiste à initialiser les profils de concentration dans la structure multicouche. Pour cela, la structure multicouche est discrétisée dans l'espace et dans le temps. La discrétisation de la structure multicouche dans l'espace est schématisée sur la figure 4. La structure multicouche, d'épaisseur e, est virtuellement découpée en tranches élémentaires suffisamment nombreuses, de manière à bien rendre compte des variations des grandeurs dans chaque tranche. Cette découpe est réalisée selon l'épaisseur e de la structure, qui correspond à la direction du transfert des trois solvants. Le nombre X de tranches élémentaires est par exemple compris entre 45 et 55 pour chaque monocouche de polymère. Il est par exemple fixé à 50 pour chaque monocouche de polymère. Chaque monocouche c1, ... cₙ, de constitution de la structure multicouche, présente une épaisseur, respectivement e1...eₙ, qui lui est propre. Le nombre de monocouches constituant la structure multicouche est par exemple limité à 7. Cependant ce nombre peut naturellement être plus élevé selon la nature de la structure multicouche à étudier.

Les interfaces de chaque monocouche sont centrées dans les première et dernière tranches élémentaires qui permettent de rendre compte de l'entrée et de la sortie de chaque monocouche. A chaque interface entre deux monocouches de polymère adjacentes, la dernière tranche élémentaire de la couche amont A et la première tranche élémentaire de la couche aval B sont en chevauchement. Pour assurer la continuité des flux, les flux entrants et sortants qui correspondent à ces deux tranches en chevauchement sont maintenus égaux. L'épaisseur e réelle de la structure multicouche est comprise entre le centre de la première tranche élémentaire et le centre de la dernière tranche élémentaire de la structure. Une fois les compositions d'entrée et de sortie connues, les activités correspondantes sont également calculées en utilisant un modèle connu, tel que le modèle UNIQUAC par exemple. Ensuite, des profils linéaires d'activité sont créés pour chacun des solvants considérés de l'entrée à la sortie, de manière continue à travers toutes les monocouches composant la structure multicouche. Les concentrations locales Ci de chaque solvant de la composition d'essence modèle sont ensuite calculées pour chaque tranche, à partir des profils d'activité ainsi créés.

Compte tenu des concentrations locales, les épaisseurs ε(i) de chaque tranche élémentaire sont recalculées selon une règle d'expansion monodirectionnelle. Le gonflement de la structure est considéré comme étant monodirectionnel. Il a lieu dans la même direction que la migration des espèces de solvant de l'essence modèle. L'expansion de l'épaisseur des tranches, induite par le gonflement du polymère, est calculée grâce à un coefficient d'expansion Expan (i) qui dépend du volume dVi de solvant absorbé dans le polymère, et du volume V0 du polymère sec. L'épaisseur d'une tranche élémentaire ε(i), prenant en compte le gonflement, devient : ε(i)= ε0(i)×Expan(i), où ε0(i) représente l'épaisseur d'une tranche i de polymère sec. Le phénomène de gonflement tend à réduire les gradients de concentration en raison de l'augmentation de l'épaisseur de la membrane. Après avoir calculé l'épaisseur d'une tranche élémentaire ε(i) de polymère gonflé, il est ensuite possible d'estimer le gradient de concentrations de chaque solvant en conséquence dans chaque tranche élémentaire.

Concernant la discrétisation en temps, un incrément du temps dt permet de calculer un bilan de matière dans chaque tranche élémentaire de la structure. Ce bilan de matière permet ensuite d'estimer des profils de concentration de chacun des solvants dans la structure multicouche.

A partir des concentrations locales de chacun des solvants, calculées à l'étape 14, l'étape suivante 15 du procédé de modélisation consiste à calculer les flux partiels. Ainsi, pour calculer les flux partiels de diffusion, on applique la première loi de Fick, selon laquelle le flux de diffusion est proportionnel au gradient de concentration. La première loi de Fick est appliquée pour chaque tranche dite « mixte », c'est-à-dire pour chaque tranche composée de deux demi-tranches voisines, d'épaisseur référencée εm(i) sur la figure 4, pour calculer les flux partiels de diffusion à travers chaque interface de tranche. Le calcul est réalisé à partir des valeurs de concentrations locales et de l'épaisseur de chaque tranche précédemment calculées à l'étape 14.

De manière avantageuse, il est en outre tenu compte des flux partiels de convection. Sachant que le flux partiel global mesuré est égal à la somme des flux partiels de diffusion et des flux partiels de convection, les flux partiels de convection sont déduits des concentrations locales calculées et du flux partiel global mesuré. Dans ce cas, un calcul itératif est réalisé pour la prise en compte des flux de convection. Ce calcul est poursuivi jusqu'à ce que la variation des flux partiels devienne négligeable.

L'étape 16 suivante consiste à effectuer un traitement à l'interface entre chaque monocouche de polymère entrant dans la constitution de la structure polymère multicouche. Selon les différentes configurations du film multicouche, on peut en général distinguer deux sortes de limitations au transfert à l'interface. Pour illustrer ces deux sortes de limitation au transfert, l'exemple d'un film bicouche, comprenant une monocouche amont A et une monocouche aval B, est décrit ci-après.

La première limitation concerne le cas où la monocouche aval B est plus perméable à une espèce que la monocouche amont A. Dans ce cas, le profil de concentration de cette espèce dans la monocouche amont A va devenir pentu pour répondre à l'épuisement créé par la monocouche aval B. L'évacuation est alors plus rapide que l'alimentation, donc aucune accumulation d'espèce ne se produit à l'interface. La concentration de cette espèce dans la monocouche aval B sera donc faible. Par conséquent, le profil de l'activité est aussi discontinu, car aucun équilibre ne s'établit à l'interface, et le transfert est contrôlé uniquement par les lois de diffusion amont, ce qui correspond à une limitation cinétique.

La deuxième limitation concerne le cas où, de façon symétrique, la monocouche aval B présente un effet barrière plus important que la monocouche amont A pour une espèce donnée. Dans ce cas, le profil de concentration de cette espèce dans la monocouche amont A va s'aplatir pour permettre une égalité des flux de part et d'autre de l'interface. Le gradient de concentration diminuant, une accumulation de matière se produit alors dans la monocouche amont A. Cette accumulation de matière est néanmoins limitée par la thermodynamique de sorption, qui fixe la limite maximale des concentrations de chaque solvant pour chaque polymère pour les activités considérées. Cette limite théorique maximale peut être calculée en considérant un équilibre thermodynamique à l'interface. Cet équilibre se traduit par une égalité de l'activité pour l'ensemble des espèces de part et d'autre de l'interface. Dans ce cas, les profils des activités sont donc continus sur l'ensemble de la bicouche. Contrairement au cas précédent, le facteur limitant est alors le plafond de sorption qui est fixé par les propriétés thermodynamiques. Ce cas particulier correspond donc à une limitation thermodynamique.

Les profils de concentration à travers une structure multicouche sont discontinus au niveau des interfaces entre les différentes monocouches. Le profil diffère selon les propriétés de chaque polymère et de chaque solvant considéré. Pour pouvoir calculer un tel profil de concentrations, on admet qu'il y a une continuité de l'activité de chaque espèce en régime stationnaire dans le cas d'un équilibre à l'interface. Ensuite, les plafonds de sorption pour chaque monocouche aval B sont estimés en supposant un équilibre thermodynamique entre les deux tranches voisines. Pour réaliser le calcul des activités de chaque solvant dans le polymère à l'interface aval de la monocouche amont A, il faut donc faire appel à un modèle connu de sorption, tel que le modèle UNIQUAC par exemple. Une fois ces activités connues et en considérant leur continuité dans le cas d'un équilibre à l'interface, il devient possible, au moyen d'un calcul inverse, de calculer la composition de l'essence entrant à l'amont de la monocouche aval B suivante.

Une évaluation de la composition de l'essence modèle E1 à Ey considérée est donc faite à l'entrée de chaque monocouche. Si cette composition dépasse le plafond thermodynamique initialement calculé, elle est alors limitée à la valeur de ce plafond.

A l'étape 17, un bilan de matière est ensuite réalisé en appliquant la seconde loi de Fick qui concerne la variation de la concentration dans le temps et dans l'espace. Cette étape de calcul permet de faire évoluer la concentration locale de chaque solvant de la composition d'essence considérée dans chaque tranche élémentaire, et donc le profil de concentration dans la structure multicouche, en fonction du temps. Les profils de concentration et les flux partiels sont modifiés à chaque incrémentation du temps dt, en appliquant des bilans de matière de tranche en tranche sur l'ensemble de la structure multicouche.

La variation de concentration est calculée à partir d'un incrément de temps dt et du bilan des flux partiels. Elle doit être limitée en choisissant un incrément de temps adapté pour assurer la convergence du calcul, lorsque les monocouches présentent notamment des perméabilités très différentes. En fait, le matériau le plus perméable contribue fortement à limiter la vitesse de modification des profils de concentration dans les matériaux les moins perméables en imposant de faibles valeurs à l'incrément de temps dt. Ceci se traduit par une augmentation qui peut être très importante de la durée de calcul nécessaire pour atteindre un régime permanent.

Etape 18 : l'incrément de temps dt est ajusté de façon automatique pour que la plus grande variation relative de concentration dC/C dans chaque monocouche ne dépasse pas une valeur identique dans toute la structure. Si la variation relative de concentration dC/C dépasse cette limite, l'incrément du temps dt est augmenté (nouveau dt = ancien dt*1.01), sinon il est diminué par un facteur 0.8 par exemple. Cette façon de discrétiser la structure multicouche dans le temps permet généralement d'éviter les problèmes de divergence du calcul. De cette façon, les bilans de matière dans chaque couche restent cohérents, c'est-à-dire que le flux de sortie est égal au flux d'entrée, tout en accélérant l'établissement des profils dans les matériaux les moins perméables.

Etape 19 : Après l'ajustement de l'incrément de temps dt et l'établissement de la variation des concentrations locales, le temps est incrémenté de dt.

Etape 20 : Les profils de concentrations PROF de chaque composé de l'essence modèle dans la structure multicouche sont mis à jour, et les épaisseurs correspondantes des tranches élémentaires sont ajustées en tenant compte du gonflement monodirectionnel de la structure multicouche.

Etape 21 : Un test est effectué pour vérifier si les flux partiels calculés sont conservatifs à travers toute la structure, c'est-à-dire si les variations de flux sont très faibles en tout point de la structure. En fait, la variation de flux doit être inférieure à 1/1000 du flux global. Dès que les flux sont identiques en tout point de la structure, les calculs se terminent, sinon le calcul reboucle à la première étape de l'estimation des flux de diffusion et des flux de convection (étape 15). Le calcul est par ailleurs adapté en fonction de l'erreur obtenue sur le critère de conservation des flux. Lorsque le système atteint le régime stationnaire, les profils de concentration et les flux partiels sont mémorisés.

### Etape 22 : sortie du calcul

Bien entendu, le même calcul est réalisé pour les données expérimentales (sorption + flux partiels), correspondant à chaque composition E1 à Ey d'essence modèle

Une fois le calcul réalisé pour toutes les données expérimentales, une fonction d'erreur est calculée en comparant les flux calculés et expérimentaux. Quand la fonction d'erreur ne s'améliore plus, le calcul se termine et les paramètres optimisés sont sauvegardés ainsi que les profils de concentration, les flux partiels et les différentes caractéristiques du système étudié.

La modélisation ainsi réalisée permet d'optimiser une structure polymère multicouche pour réservoir à partir des calculs. Elle permet de gagner beaucoup de temps, et donc d'argent, dans la conception des réservoirs. Typiquement, un calcul nécessite 1 journée alors que les mesures prennent plus d'un an pour les réservoirs pour carburants industriels. De plus, cette modélisation permet en outre de définir un ordre d'empilement des différents matériaux et d'ajuster leurs épaisseurs. Enfin, grâce à la modélisation, il est possible de s'intéresser à de nouveaux matériaux et de concevoir de nouvelles structures non envisagées jusqu'à présent.

### Exemple 1 :

Une modélisation de transfert de matière a été réalisée sur une structure bicouche et les résultats de la modélisation ont été comparés aux valeurs mesurées expérimentalement sur cette même structure bicouche. Les résultats de ces comparaisons sont représentés sur les courbes de la figure 5.

La structure bicouche est un film comprenant une couche de liant de 9 µm d'épaisseur et une couche de PEHD (Polyéthylène haute densité) de 24 µm d'épaisseur. L'essence se trouve du côté de la couche amont, c'est-à-dire de la couche de liant. Le liant utilisé est du LLDPE greffé anhydride maléique, autrement dit il s'agit de polyéthylène à basse densité linéaire greffé anhydride maléique, LLDPE étant l'acronyme anglais pour « Linear Low-Density PolyEthylene ». Les mesures et la modélisation ont été réalisées pour différentes compositions d'essence. Typiquement, on a fait varier le taux volumique (%) d'éthanol de 0 à 100%, tout en conservant une proportion volumique identique entre les deux autres hydrocarbures, l'iso-octane et le toluène. Ainsi, lorsqu'une composition d'essence comprend 10% d'ethanol, elle comprend 45% d'iso-octane et 45% de toluène. De même, lorsqu'une autre composition d'essence comprend 60% d'éthanol, elle comprend 20% d'iso-octane et 20% de toluène. Les flux partiels des différents composés de l'essence ont été mesurés et modélisés pour une température de 50°C. Les symboles vides correspondent aux mesures, alors que les courbes avec les symboles pleins correspondent aux calculs.

On constate un très bon accord entre le calcul et les mesures sur toute la gamme de composition de l'essence.

### Exemple n°2 :

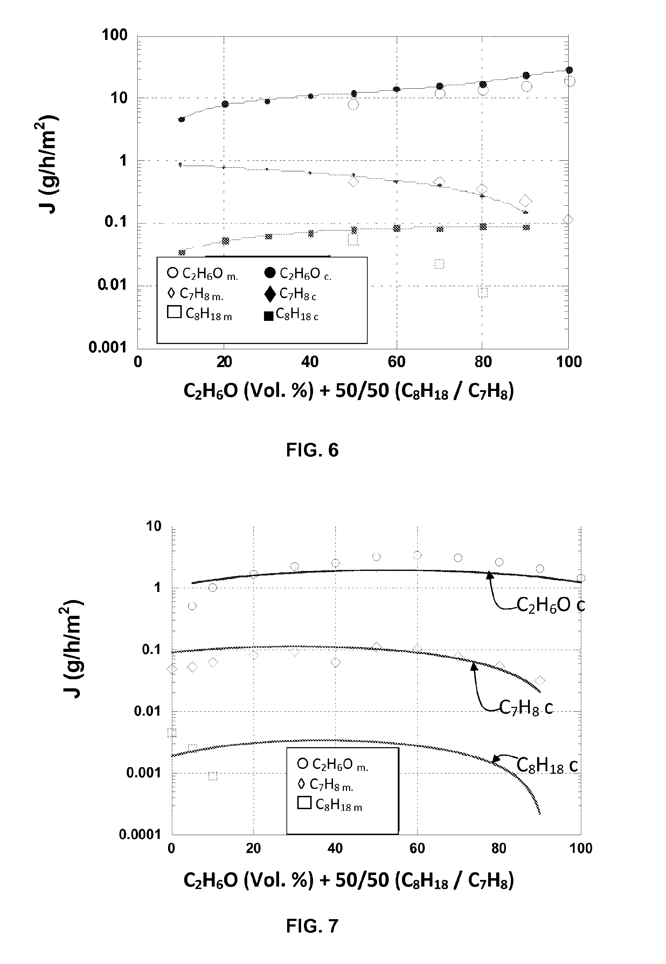

La même modélisation a été réalisée pour un autre film bicouche comprenant une couche amont, en contact avec l'essence, d'un EVOH (Poly(Ethylène-co-vinyl alcool)) de 25 µm d'épaisseur et une couche aval de liant de 10 µm d'épaisseur. Tout comme dans l'exemple précédent, le liant utilisé est du LLDPE greffé anhydride maléique. Les résultats de ces comparaisons sont représentés sur les courbes de la figure 6.

Dans ce cas aussi on constate un très bon accord entre le calcul (symboles pleins) et les mesures (symboles vides) sur toute la gamme de composition de l'essence.

### Exemple n°3 :

La même modélisation a été réalisée pour un autre film tricouche comprenant une couche amont, en contact avec l'essence, de PEHD (Polyéthylène haute densité) de 25 µm d'épaisseur, une couche de liant (LLDPE greffé anhydride maléique) de 11 µm d'épaisseur et une couche d'un EVOH (Poly(Ethylène-co-vinyl alcool)) de 10 µm d'épaisseur. Les résultats de ces comparaisons sont représentés sur les courbes de la figure 7.

Dans ce cas aussi on constate un très bon accord entre le calcul (courbes) et les mesures (symboles vides) sur toute la gamme de composition de l'essence.

### Exemple n° 4 : Influence de l'épaisseur des couches

L'influence de l'épaisseur de chacune des monocouches, entrant dans la constitution d'une structure multicouche, sur la perméabilité globale de cette structure, a été modélisée.

Les calculs ont été réalisés pour une structure constituée de 5 couches, en faisant varier l'épaisseur de chacune des couches de façon indépendante. La structure multicouche comprend plus précisément les couches suivantes : PEHD (polyéthylène haute densité) / Liant (LLDPE greffé anhydride maléique / EVOH (Poly(Ethylène-co-vinyl alcool)) / Liant / PEHD. Les calculs sont d'autre part réalisés à 50°C, avec un modèle d'essence E20, comprenant 20% éthanol, 40% *iso*-octane et 40% toluène en volume.

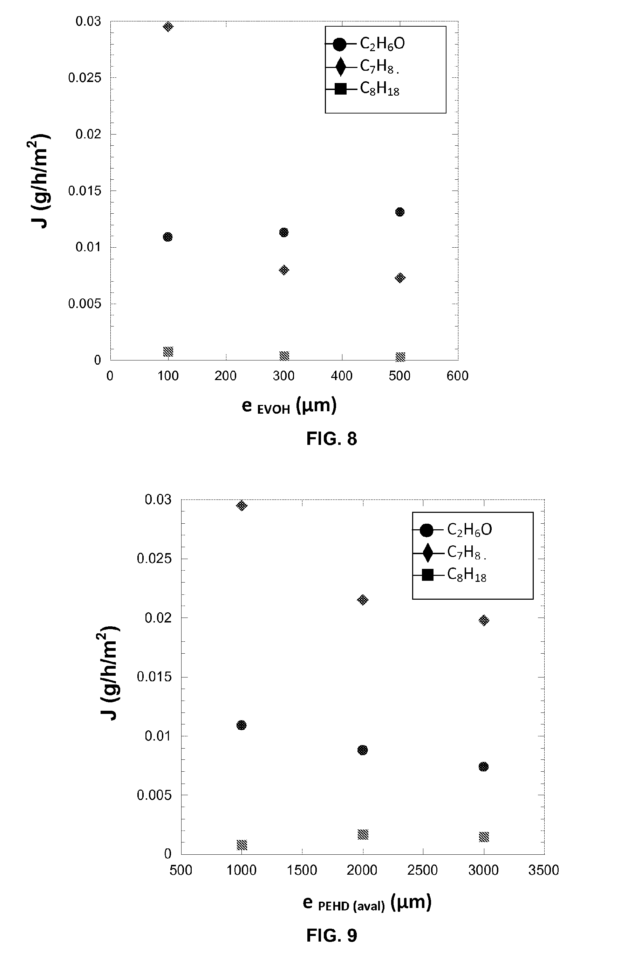

La Figure 8 montre l'évolution des flux partiels des différents solvants de l'essence E20 en fonction de l'épaisseur de la couche d'EVOH. On constate que les flux de toluène diminuent rapidement lorsque l'épaisseur de ce polymère, placé au milieu de la structure, augmente. Le flux de l'*iso*-octane est moins influencé car il est déjà extrêmement faible. Cependant, il est intéressant de noter que le flux d'éthanol semble au contraire augmenter avec l'épaisseur d'EVOH dans la multicouche. En résumé, l'augmentation de l'épaisseur de la couche d'EVOH permet de réduire considérablement les flux d'hydrocarbures, au détriment de l'effet barrière global vis-à-vis de l'éthanol.

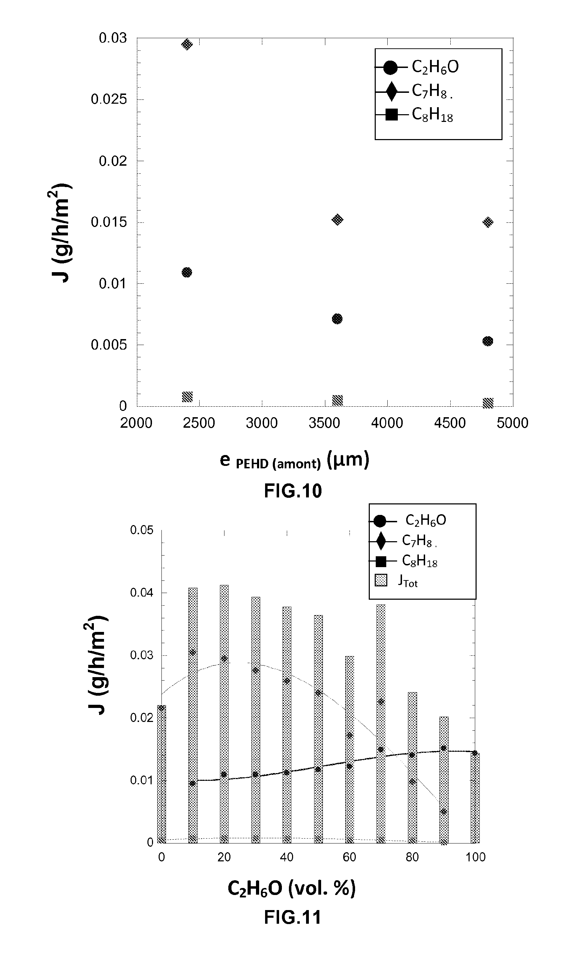

Les Figures 9 et 10 présentent l'influence de l'épaisseur des couches de PEHD respectivement à l'aval et à l'amont de la structure. Globalement, l'augmentation de l'épaisseur de l'une ou l'autre de ces couches de PEHD permet de diminuer les flux partiels de l'éthanol et du toluène, alors que l'effet est moins clair sur le flux de l'iso-octane déjà extrêmement faible pour la structure multicouche considérée. L'effet de réduction des perméabilités est plus important si l'épaisseur de la couche amont de PEHD augmente comparée à celle de la couche aval. En effet, la couche amont de PEHD est en contact direct avec le mélange modèle de carburants, elle joue un rôle protecteur pour les couches suivantes, notamment l'EVOH. Quant à la couche aval de PEHD, son rôle est moindre car elle arrive après deux couches de polymères aux effets fortement antagonistes.

### Exemple n° 5 : Influence de la composition d'essence modèle

L'étude de l'influence de la composition de l'essence modèle sur les perméabilités des structures multicouches est très importante sur le plan pratique. En effet, à l'heure actuelle, les compositions des essences varient beaucoup à l'échelle internationale selon les producteurs et les législations. La part des additifs issus de voies biologiques, comme le bio-éthanol, peut attendre jusqu'à 80% même 100% dans certains pays comme le Brésil. Par conséquent, il est important de bien s'assurer qu'avec une si grande diversité des carburants, l'effet barrière des réservoirs pour carburants reste suffisant pour répondre aux normes environnementales internationales.

Dans cet objectif, les prédictions ont été réalisées pour un film de 5 couches PEHD/Liant/EVOH/Liant/PEHD avec les épaisseurs respectives 2400/100/100/100/1000 en microns pour chacune des couches. Les compositions des mélanges modèles de carburants sont celles basées sur la droite de conjugaison de l'éthanol, c'est-à-dire sur des modèles d'essence contenant des teneurs volumiques croissantes en éthanol et variant de 0 à 100% et des proportions équivolumiques d'iso-octane et de toluène.

La Figure 11 permet d'évaluer l'influence de la composition de cette essence modèle sur les flux partiels et globaux J_{Tot}.

En ce qui concerne les flux partiels, quelle que soit la teneur en éthanol de l'essence étudiée, le flux d'*iso*-octane est toujours très inférieur aux flux des deux autres solvants et ne présente pas de variation significative sur la plage de compositions étudiées. Le flux d'éthanol, quant à lui, est quasiment constant jusqu'à une teneur de 50% en éthanol, puis il augmente légèrement pour des mélanges encore plus enrichis en alcool. Ici, le rôle de la couche amont de PEHD apparaît donc très important pour limiter le flux de ce composé polaire. Finalement, le composé de loin le plus influencé par un changement de composition de l'essence modèle est le toluène. La Figure 11 montre que le flux du toluène passe par un maximum pour une faible teneur en éthanol (environ 10%) puis il diminue fortement lorsque la teneur en alcool augmente. Le maximum observé, qui ne peut correspondre à une diminution de la teneur en toluène lorsque la teneur en éthanol augmente, est très probablement lié à un effet de plastification de la couche d'EVOH par l'éthanol. Passé ce maximum, l'effet de plastification par l'éthanol est plus que compensé par la diminution de la teneur en toluène et le flux du toluène diminue alors généralement de façon importante.

Si on s'intéresse aux perméabilités globales, elles restent faibles pour les deux compositions extrêmes (0% et 100% éthanol). Cependant, en introduisant seulement 10% d'éthanol dans l'essence, la perméabilité globale est presque doublée à cause de la diminution de l'effet barrière de la couche d'EVOH, puis elle reste à un niveau quasi-stable (environ 0.04g/h/m²) pour une large plage de composition. En conclusion, d'après les résultats de simulation, la présence d'éthanol peut dégrader les performances barrières d'un film multicouche PEHD/Liant/EVOH/Liant/PEHD, mais la dégradation reste limitée à une augmentation de perméabilité par un facteur voisin de 2.

### Exemple n°6 : Influence de la structure du film multicouche

Une dernière étude a porté sur l'influence de l'organisation des couches, dans l'objectif de pouvoir optimiser la disposition des différentes couches pour conduire à des perméabilités les plus faibles possibles. Jusqu'à présent, les structures multicouches testées, dans l'industrie ou en laboratoire, ont presque toutes la même structure, avec deux couches de PEHD sur les côtés et une couche d'EVOH au centre. A titre comparatif, les flux ont été calculés pour un agencement inversé des différentes couches.

Le film étudié est donc composé de 5 couches EVOH/Liant/PEHD/Liant/EVOH, avec des épaisseurs respectives de chacune des couches de 50/100/500/100/50 en microns, dont la perméabilité a été simulée pour un mélange modèle de carburants éthanol/iso-octane/toluène de composition volumique 20/40/40. Il est à noter que cet agencement des différentes couches n'apparaît pas réaliste pour une application industrielle en raison notamment de la forte sensibilité à l'humidité de l'EVOH. Néanmoins, l'étude de cet agencement permet de donner une comparaison avec l'agencement inverse très utilisé dans l'industrie. Les résultats de cette comparaison sont synthétisés dans le tableau I ci-dessous.

**Tableau I**

| | J_{C2H6O} (g/h/m²) | J_{C8H18} (g/h/m²) | J_{C7H8} (g/h/m²) | J_{Total} (g/h/m²) |
|---|---|---|---|---|
| PEHD/L/**EVOH**/L/PEHD (250/100/100/100/250 µm) | 0.1435 | 0.0043 | 0.1042 | 0.2520 |
| **EVOH**/L/PEHD/L/**EVOH** (50/100/500/100/50 µm) | 0.2946 | 0.0020 | 0.0617 | 0.3583 |

En comparant les deux structures multicouches ayant des agencements inversés mais la même épaisseur pour chaque couche, la perméabilité globale est augmentée de 40% lorsque l'EVOH est placé sur les deux côtés externes en raison d'un flux partiel d'éthanol environ deux fois plus élevé. Cependant, cette multicouche à l'agencement inversé offre un meilleur effet barrière vis-à-vis des hydrocarbures.

Le procédé de modélisation selon l'invention permet donc de prédire l'ensemble des flux partiels des différents solvants (éthanol, iso-octane et toluène) à travers des structures multicouches qui se composent de plusieurs couches de polymères de natures et d'épaisseurs différentes. Le procédé permet en outre d'optimiser d'une part l'épaisseur des différentes couches de la structure et d'autre part, l'ordre d'empilement des matériaux constituant les différentes couches de la structure multicouches. Ainsi des structures de réservoir peuvent être modélisées rapidement à partir de ces calculs, pour répondre au mieux aux normes environnementales.

Enfin, ce procédé de modélisation est avantageusement mis en oeuvre au moyen d'un programme d'ordinateur, comprenant des instructions de code de programme pour l'exécution des étapes du procédé, le programme étant lui-même exécuté par un processeur.

## Revendications

1. Procédé de réalisation d'un modèle de perméation aux mélanges de solvants d'une structure polymère multicouches à n monocouches (c₁,...,cₙ) (n≥2), ledit procédé étant principalement **caractérisé en ce qu'**il comprend la mise en oeuvre des étapes suivantes :
1) choisir plusieurs compositions initiales de mélange de solvants E1 à Ey, chaque composition de mélange de solvants comprenant un mélange d'au moins deux composés choisis parmi un composé oxygéné (a), un composé aliphatique (b) et un composé aromatique (c), dans des proportions différentes,
2) pour chaque composition de mélange de solvants E1 à Ey, effectuer les étapes suivantes :
a. pour chaque monocouche (c₁, ...,cₙ) entrant dans la constitution de la structure multicouche, effectuer :
- une mesure de sorption consistant à mesurer une quantité de chaque composé (a, b, c), de ladite composition de mélange de solvants, absorbée par ladite monocouche (c₁,...,cₙ), obtenant ainsi un modèle correspondant à la loi thermodynamique de sorption de ladite couche (c₁,...,cₙ),
- une mesure de diffusion, par une mesure de flux partiels, de chaque composé (a, b, c) de ladite composition de mélange de solvants à travers ladite monocouche (c₁,...,cₙ), obtenant ainsi un modèle correspondant à la loi cinétique de diffusion de ladite couche (c₁,...,cₙ),
b. discrétiser ladite structure multicouche dans l'espace et dans le temps, la discrétisation dans l'espace consistant à découper virtuellement chaque monocouche (c₁,...,cₙ) de la structure multicouche en X tranches élémentaires, puis considérer ladite structure multicouche à n monocouches (c₁,...,cₙ) comme une succession de (n-1) bicouches, chaque bicouche comprenant une monocouche amont A et une monocouche aval B,
c.à partir des données mesurées pour chaque monocouche (c₁,...,cₙ) à l'étape 2.a :
c.1. estimer des flux partiels (Ji) de chacun des composés (a,b,c) de ladite composition de mélange de solvants entre chaque tranche élémentaire de ladite structure multicouche,
c.2. à l'interface entre chaque monocouche amont A et aval B de ladite structure multicouche, estimer d'une part un plafond de sorption maximal de ladite monocouche aval B et d'autre part la composition de mélange de solvants en entrée de ladite monocouche aval B, ladite composition étant limitée audit plafond de sorption maximal estimé,
c.3. réaliser un bilan de matière de tranche en tranche en fonction du temps, de manière à obtenir un profil de concentrations (Ci) de chaque composé (a, b, c) de ladite composition de mélange de solvants dans ladite structure multicouches en fonction du temps,
c.4. ajuster le profil de concentrations (Ci), le profil de flux partiels (Ji) et les épaisseurs ε(i) des tranches élémentaires en tenant compte d'un gonflement monodirectionnel de la structure,
c.5. réitérer les étapes c1 à c4 jusqu'à ce que les flux partiels (Ji) soient conservatifs en tout point de la structure, c'est à dire jusqu'à ce que les variations de flux soient très faibles en tout point de la structure,
d. dès lors que les flux partiels (Ji) sont conservatifs, mémoriser les profils de concentration et les flux partiels (Ji) obtenus.

2. Procédé selon la revendication 1, **caractérisé en ce que** le mélange de solvants est une essence comprenant un mélange d'au moins deux composés choisis parmi un composé oxygéné (a), un composé aliphatique (b) et un composé aromatique (c), dans des proportions différentes.

3. Procédé selon la revendication 2, **caractérisé en ce que** l'essence comprend un mélange d'au moins un composé oxygéné (a), un composé aliphatique (b) et un composé aromatique (c), dans des proportions différentes.

4. Procédé selon l'une des revendications 1 à 3, **caractérisé en ce que** préalablement à l'étape 2c.1. d'estimation des flux partiels (Ji), une étape d'initialisation consiste à calculer, à partir des valeurs de sorption en entrée et en sortie de la structure multicouche, des activités correspondantes de chacun des composés (a, b, c) de ladite composition de mélange de solvants en entrée et sortie de ladite structure, puis à créer un profil linéaire d'activité pour chacun des solvants de l'entrée à la sortie de la structure puis, à partir de ce profil d'activité, estimer des concentrations locales (Ci) de chacun des composés (a, b, c) de ladite composition de mélange de solvants dans chaque tranche de ladite structure multicouche, ainsi que l'épaisseur ε(i) des tranches élémentaires en tenant compte d'un gonflement monodirectionnel de ladite structure multicouche.

5. Procédé selon l'une des revendications 1 à 3, **caractérisé en ce que** l'étape 2c.1. d'estimation des flux partiels (Ji) consiste à estimer d'une part des flux de diffusion, à partir des concentrations locales (Ci) de chacun des composés (a, b, c) de ladite composition de mélange de solvants dans chaque tranche élémentaire, et d'autre part des flux de convection, à partir des flux partiels mesurés à l'étape 2a et des concentrations locales (Ci) de chacun des composés (a, b, c) de ladite composition de mélange de solvants dans chaque tranche élémentaire.

6. Procédé selon l'une des revendications 1 à 3, **caractérisé en ce que** le traitement à l'interface entre deux monocouches de matériaux polymère différents de l'étape 2c.2 se base sur le fait qu'il y a égalité des flux entre deux monocouches adjacentes et que la concentration de chacun des composés (a, b, c) à l'entrée de la monocouche aval B ne peut dépasser le plafond de sorption.

7. Procédé selon l'une des revendications précédentes, **caractérisé en ce que** le plafond de sorption est calculé à partir des activités de chacun des composés (a, b, c) de ladite composition de mélange de solvants, en supposant qu'il y a continuité d'activité entre la dernière tranche d'une monocouche amont A en chevauchement avec une première tranche d'une monocouche aval B.

8. Procédé selon l'une des revendications précédentes, **caractérisé en ce que** chaque composition d'essence E1 à Ey comprend un taux volumique (%) de l'un des composés (a) qui varie d'une composition à l'autre, tandis que les autres composés (b, c) présentent une proportion volumique identique.

9. Procédé selon l'une des revendications précédentes, **caractérisé en ce que** le nombre de compositions d'essence est compris entre 5 et 10.

10. Procédé selon l'une des revendications précédentes, **caractérisé en ce que** chaque composition d'essence comprend un mélange de plusieurs composés (a, b, c) choisis parmi l'éthanol (a), l'iso-octane (b), et le toluène (c).

11. Programme d'ordinateur comprenant des instructions de code de programme pour l'exécution des étapes du procédé de modélisation selon l'une des revendications 1 à 10, lorsque ledit programme est exécuté par un processeur.

## Patentansprüche

1. Verfahren zur Herstellung eines Modells der Durchlässigkeit einer mehrlagigen Polymerstruktur mit n Einfachschichten (c₁, ... cₙ) (n≥2) gegenüber Lösungsmittelgemischen, wobei das Verfahren im Wesentlichen **dadurch gekennzeichnet ist, dass** es das Ausführen der folgenden Schritte umfasst:
1) Auswählen mehrerer Ausgangszusammensetzungen von Lösungsmittelgemischen E1 bis Ey, wobei jede Lösungsmittelgemischzusammensetzung ein Gemisch aus mindestens zwei Verbindungen umfasst, ausgewählt aus einer sauerstoffhaltigen Verbindung (a), einer aliphatischen Verbindung (b) und einer aromatischen Verbindung (c) in verschiedenen Anteilen,
2) für jede Lösungsmittelgemischzusammensetzung E1 bis Ey, Durchführen der folgenden Schritte:
a. für jede Einfachschicht (c₁, ... cₙ), die am Aufbau der mehrschichtigen Struktur beteiligt ist, Durchführen:
- einer Sorptionsmessung, die darin besteht, eine Menge jeder Verbindung (a, b, c) der Lösungsmittelgemischzusammensetzung, die von der Einfachschicht (c₁, ... cₙ) absorbiert wird, zu messen, wobei auf diese Weise ein Modell erhalten wird, das dem thermodynamischen Sorptionsgesetz der Schicht (c₁, ... cₙ) entspricht,
- einer Diffusionsmessung durch eine Messung von Teilströmen jeder Verbindung (a, b, c) der Lösungsmittelgemischzusammensetzung durch die Einfachschicht (c₁, ... cₙ), wobei auf diese Weise ein Modell erhalten wird, das dem diffusionskinetischen Gesetz der Schicht (c₁, ... cₙ) entspricht,
b. Diskretisieren der mehrlagigen Struktur in Raum und Zeit, wobei die Diskretisierung im Raum darin besteht, jede Einfachschicht (c₁, ... cₙ) der mehrlagigen Struktur virtuell in X Einzelabschnitte zu schneiden, dann die mehrlagige Struktur mit n Einfachschichten (c₁, ... cₙ) als eine Abfolge von (n-1) Doppelschichten zu betrachten, wobei jede Doppelschicht eine stromaufwärtige obere Einfachschicht A und eine stromabwärtige untere Einfachschicht B umfasst,
c. ausgehend von Daten, die für jede Einfachschicht (c₁, ... cₙ) in Schritt 2.a gemessen wurden:
c.1. Schätzen der Teilströme (Ji) jeder der Verbindungen (a, b, c) der Lösungsmittelgemischzusammensetzung zwischen jedem Einzelabschnitt der mehrlagigen Struktur,
c.2. an der Schnittstelle zwischen jeder stromaufwärtigen Einfachschicht A und stromabwärtigen Einfachschicht B der mehrlagigen Struktur, einerseits Schätzen eines maximalen Sorptionsgrenzwertes der stromabwärtigen Einfachschicht B und andererseits der Lösungsmittelgemischzusammensetzung am Eingang der stromabwärtigen Einfachschicht B, wobei die Zusammensetzung auf den geschätzten maximalen Sorptionsgrenzwert begrenzt ist,
c.3. Erzeugen einer Stoffbilanz für jeden Abschnitt in Abhängigkeit von der Zeit, um ein Profil von Konzentrationen (Ci) jeder Verbindung (a, b, c) der Lösungsmittelgemischzusammensetzung in der mehrlagigen Struktur in Abhängigkeit von der Zeit zu erhalten,
c.4. Anpassen des Profils der Konzentrationen (Ci), des Profils der Teilströme (Ji) und der Dicken ε(i) der Einzelabschnitte unter Berücksichtigung eines unidirektionalen Aufquellens der Struktur,
c.5. Wiederholen der Schritte c1 bis c4 bis die Teilströme (Ji) an jedem Punkt der Struktur quellenfrei sind, das heißt, bis die Variationen der Ströme an jedem Punkt der Struktur sehr gering sind,
d. sobald die Teilströme (Ji) quellenfrei sind, Speichern der erhaltenen Konzentrationsprofile und Teilströme (Ji).

2. Verfahren nach Anspruch 1, **dadurch gekennzeichnet, dass** das Lösungsmittelgemisch ein Benzin ist, das ein Gemisch aus mindestens zwei Verbindungen umfasst, ausgewählt aus einer sauerstoffhaltigen Verbindung (a), einer aliphatischen Verbindung (b) und einer aromatischen Verbindung (c) in verschiedenen Anteilen.

3. Verfahren nach Anspruch 2, **dadurch gekennzeichnet, dass** das Benzin ein Gemisch aus mindestens einer sauerstoffhaltigen Verbindung (a), einer aliphatischen Verbindung (b) und einer aromatischen Verbindung (c) in verschiedenen Anteilen umfasst.

4. Verfahren nach einem der Ansprüche 1 bis 3, **dadurch gekennzeichnet, dass** vor Schritt 2c.1. zur Schätzung der Teilströme (Ji) ein Schritt zur Initialisierung darin besteht, ausgehend von Sorptionswerten am Eingang und am Ausgang der mehrlagigen Struktur, entsprechende Aktivitäten jeder der Verbindungen (a, b, c) der Lösungsmittelgemischzusammensetzung am Eingang und am Ausgang der Struktur zu berechnen, dann ein lineares Aktivitätsprofil für jedes der Lösungsmittel vom Eingang zum Ausgang der Struktur zu erzeugen, dann ausgehend von diesem Aktivitätsprofil, lokale Konzentrationen (Ci) jeder der Verbindungen (a, b, c) der Lösungsmittelgemischzusammensetzung in jedem Abschnitt der mehrlagigen Struktur sowie der Dicke ε(i) der Einzelabschnitte unter Berücksichtigung eines unidirektionalen Aufquellens der mehrlagigen Struktur zu schätzen.

5. Verfahren nach einem der Ansprüche 1 bis 3, **dadurch gekennzeichnet, dass** Schritt 2c.1. zum Schätzen der Teilströme (Ji) darin besteht einerseits Diffusionsströme ausgehend von lokalen Konzentrationen (Ci) jeder der Verbindungen (a, b, c) der Lösungsmittelgemischzusammensetzung in jedem Einzelabschnitt und andererseits Konvektionsströme ausgehend von Teilströmen, gemessen in Schritt 2a und lokalen Konzentrationen (Ci) von jeder der Verbindungen (a, b, c) der Lösungsmittelgemischzusammensetzung in jedem Einzelabschnitt zu schätzen.

6. Verfahren nach einem der Ansprüche 1 bis 3, **dadurch gekennzeichnet, dass** die Behandlung an der Schnittstelle zwischen zwei Einfachschichten aus verschiedenen Polymermaterialien aus Schritt 2c.2 auf der Tatsache basiert, dass es eine Gleichheit der Ströme zwischen zwei benachbarten Einfachschichten gibt und dass die Konzentration von jeder der Verbindungen (a, b, c) am Eingang der stromabwärtigen Einfachschicht B den Sorptionsgrenzwert nicht übersteigen kann.

7. Verfahren nach einem der vorhergehenden Ansprüche, **dadurch gekennzeichnet, dass** der Sorptionsgrenzwert ausgehend von den Aktivitäten jeder der Verbindungen (a, b, c) der Lösungsmittelgemischzusammensetzung unter der Annahme berechnet wird, dass es eine Kontinuität der Aktivität zwischen dem letzten Abschnitt einer stromaufwärtigen Einfachschicht A gibt, die sich mit einem ersten Abschnitt einer stromabwärtigen Einfachschicht B überlappt.

8. Verfahren nach einem der vorhergehenden Ansprüche, **dadurch gekennzeichnet, dass** jede Benzinzusammensetzung E1 bis Ey einen Volumenanteil (%) einer der Verbindungen (a) umfasst, der zwischen den Zusammensetzungen variiert, während die anderen Verbindungen (b, c) einen identischen Volumenanteil aufweisen.

9. Verfahren nach einem der vorhergehenden Ansprüche, **dadurch gekennzeichnet, dass** die Anzahl der Benzinzusammensetzungen im Bereich zwischen 5 und 10 liegt.

10. Verfahren nach einem der vorhergehenden Ansprüche, **dadurch gekennzeichnet, dass** jede Benzinzusammensetzung ein Gemisch aus mehreren Verbindungen (a, b, c) umfasst, ausgewählt aus Ethanol (a), Isooctan (b) und Toluol (c).

11. Computerprogramm, umfassend Programmcode-Anweisungen für die Ausführung der Schritte des Modellierungsverfahrens gemäß einem der Ansprüche 1 bis 10, wenn das Programm von einem Prozessor ausgeführt wird.

## Claims

1. A method of modeling the permeation of mixtures of solvents through a multilayer polymer structure with n monolayers (c₁, ..., cₙ) (n≥2), said method being characterized mainly in that it comprises carrying out the following steps:
1) selecting several initial compositions of solvent mixture E1 to Ey, each composition of solvent mixture comprising a mixture of at least two compounds selected from an oxygen-containing compound (a), an aliphatic compound (b) and an aromatic compound (c), in various proportions,
2) for each composition of solvent mixture E1 to Ey, carrying out the following steps:
a. for each monolayer (c₁, ..., cₙ) included in the constitution of the multilayer structure, carrying out:
- a sorption measurement consisting of measuring an amount of each compound (a, b, c), of said composition of solvent mixture, absorbed by said monolayers (c₁, ..., cₙ), thus obtaining a model corresponding to the thermodynamic law of sorption of said layers (c₁, ..., cₙ),
- measurement of diffusion, by measuring partial fluxes, of each compound (a, b, c) of said composition of solvent mixture through said monolayers (c₁, ..., cₙ), thus obtaining a model corresponding to the kinetic law of diffusion of said layers (c₁, ..., cₙ),
b.discretizing said multilayer structure in space and time, the discretization in space consisting of cutting up, virtually, each monolayers (c₁, ..., cₙ) of the multilayer structure into X elementary slices, and then regarding said multilayer structure with n monolayers (c₁, ..., cₙ) as a succession of (n-1) bilayers, each bilayer comprising an upstream monolayer A and a downstream monolayer B,
c. based on the data measured for each monolayer in step 2.a:
c.1. estimating partial fluxes (Ji) of each of the compounds (a,b,c) of said composition of solvent mixture between each elementary slice of said multilayer structure,
c.2. at the interface between each upstream monolayer A and downstream monolayer B of said multilayer structure, estimating on the one hand a maximal sorption ceiling of said downstream monolayer B and on the other hand the composition of solvent mixture at inlet of said downstream monolayer B, said composition being limited to said estimated maximal sorption ceiling,
c.3. performing a mass balance from slice to slice as a function of time, so as to obtain a concentration profile (Ci) of each compound of said composition (a, b, c) of solvent mixture in said multilayer structure as a function of time,
c.4. adjusting the profile of concentrations (Ci), the profile of partial fluxes (Ji) and the thicknesses ε(i) of the elementary slices, taking into account monodirectional swelling of the structure,
c.5. repeating steps c1 to c4 until the partial fluxes (Ji) are conservative at every point of the structure, i.e. until the flux variations be very weak on each point of the structure
d. once the partial fluxes (Ji) are conservative, storing the concentration profiles and the partial fluxes (Ji) obtained.

2. The method as claimed in claim 1, **characterized in that** the solvent mixture is an essence comprising a mixture of at least two compounds selected from an oxygen-containing compound (a), an aliphatic compound (b) and an aromatic compound (c), in various proportions.

3. The method as claimed in claim 2, **characterized in that** the essence comprises a mixture of at least one oxygen-containing compound (a), an aliphatic compound (b) and an aromatic compound (c), in various proportions.

4. The method as claimed in one of claims 1 to 3, **characterized in that** prior to step 2c.1. for estimating the partial fluxes (Ji), an initialization step consists of calculating, from the values of sorption at inlet and outlet of the multilayer structure, corresponding activities of each of the compounds (a, b, c) of said composition of solvent mixture at inlet and outlet of said structure, and then creating a linear activity profile for each of the solvents from inlet to outlet of the structure and then, based on this activity profile, estimating local concentrations (Ci) of each of the compounds (a, b, c) of said composition of solvent mixture in each slice of said multilayer structure, as well as the thickness ε(i) of the elementary slices, taking into account monodirectional swelling of said multilayer structure.

5. The method as claimed in one of claims 1 to 3, **characterized in that** step 2c.1. of estimating the partial fluxes (Ji) consists of estimating on the one hand diffusion fluxes, from the local concentrations (Ci) of each of the compounds (a, b, c) of said composition of solvent mixture in each elementary slice, and on the other hand convection fluxes, from the partial fluxes measured in step 2a and the local concentrations (Ci) of each of the compounds (a, b, c) of said composition of solvent mixture in each elementary slice.

6. The method as claimed in one of claims 1 to 3, **characterized in that** the treatment at the interface between two monolayers of polymer materials different from step 2c.2 is based on the fact that there is equality of the flows between two adjacent monolayers and that the concentration of each of the compounds (a, b, c) at inlet of the downstream monolayer B cannot exceed the sorption ceiling.

7. The method as claimed in one of the preceding claims, **characterized in that** the sorption ceiling is calculated from the activities of each of the compounds (a, b, c) of said composition of solvent mixture, on the assumption that there is continuity of activity between the last slice of an upstream monolayer A overlapping with a first slice of a downstream monolayer B.

8. The method as claimed in one of the preceding claims, **characterized in that** each essence composition E1 to Ey comprises a proportion by volume (%) of one of the compounds (a) that varies from one composition to another, whereas the other compounds (b, c) have an identical proportion by volume.

9. The method as claimed in one of the preceding claims, **characterized in that** the number of compositions of essence is between 5 and 10.

10. The method as claimed in one of the preceding claims, **characterized in that** each essence composition comprises a mixture of several compounds (a, b, c) selected from ethanol (a), iso-octane (b), and toluene (c).

11. A computer program comprising program code instructions for executing the steps of the method of modeling as claimed in one of claims 1 to 10, when said program is executed by a processor.
